# EUROPEAN PATENT SPECIFICATION

(11) **EP 2 169 036 B1**
(45) Date of publication and mention of the grant of the patent: **14.11.2018**
(21) Application number: 08777013.7
(22) Date of filing: 30.05.2008
(51) Int. Cl.: C10M 169/00, F16D 3/20, C10M 115/08, C10M 135/00, C10M 135/18, C10M 137/10, C10N 30/00, C10N 30/06, C10N 40/04

(54) **GREASE COMPOSITION FOR CONSTANT-VELOCITY JOINT AND CONSTANT-VELOCITY JOINT HERMETICALLY ENCLOSING THE SAME**
SCHMIERFETTZUSAMMENSETZUNG FÜR GLEICHLAUFGELENK UND HERMETISCH DAMIT GEFÜLLTES GLEICHLAUFGELENK
COMPOSITION DE GRAISSE POUR ASSEMBLAGE À VÉLOCITÉ CONSTANTE ET ASSEMBLAGE À VÉLOCITÉ CONSTANTE REMPLI HERMÉTIQUEMENT PAR CELLE-CI

(30) Priority: 30.05.2007 JP 2007143704
(43) Date of publication of application: 31.03.2010
(73) Proprietor: Kyodo Yushi Co., Ltd., Kanagawa 251-8588 (JP); NTN Corporation, Osaka-shi, Osaka 550-0003 (JP)
(72) Inventor: NAGUMO, Daigo, Fujisawa-shi Kanagawa 251-8588 (JP); ONUKI, Yuji, Fujisawa-shi Kanagawa 251-8588 (JP); KONDO, Shinya, Fujisawa-shi Kanagawa 251-8588 (JP); TOMOGAMI, Shin, Iwata-shi Shizuoka 438-8510 (JP); TAKABE, Shinichi, Iwata-shi Shizuoka 438-8510 (JP)
(74) Representative: Vossius & Partner Patentanwälte Rechtsanwälte mbB
(86) International application number: PCT/JP2008/060002
(87) International publication number: WO 2008/146909

(56) References cited:
- JP-A- 09 087 649
- JP-A- 2001 520 301
- JP-A- 2004 204 218
- US-A- 6 063 740
- US-A1- 2002 013 232

## Description

### TECHNICAL FIELD

The present invention relates to a grease composition for constant-velocity joints and a constant-velocity joint enclosing the same, particularly to a grease composition for constant-velocity joints suitably employed for slide-type constant-velocity joints or fixed-type constant-velocity joints and to a constant-velocity joint enclosing such a grease composition.

### BACKGROUND ART

These days, in the automobile industry, the production of FF cars is increasing from the viewpoint of assuring weight reduction and passenger space. The production of 4WD cars is also increasing from the viewpoint of their functionality. Since these FF cars and 4WD cars transmit power and steering through front wheels, smooth power transmission is required even, for example, in the state that the front wheels are steered to the full lock position. Thus, the constant-velocity joint is indispensable as a component that transmits rotational motion of one axis to another axis at a constant velocity even when a crossing angle of the two axes which cross each other changes widely.

Among these constant-velocity joints, a ball-type constant-velocity joint has a structure in which a ball transmits torque as a rolling element. Flaking may take place in this structure because, during rotation, repetitive stress is applied to the ball and to the metal surface which the ball contacts due to a complex rolling and sliding motion under a high contact pressure.

In addition, higher output of recent engines has made the conditions of constant-velocity joint severer, and occurrence of flaking on the rolling surface of an outer race and an inner race and on the ball tends to be further accelerated. Therefore, the improvement of anti-flaking property is demanded.

As a grease composition for constant-velocity joints to overcome the above-described problems, a grease composition for constant-velocity joint containing a base oil, a urea thickener, sulfurized molybdenum dialkyldithiocarbamate, molybdenum disulfide, dialkyldithiophosphate, an oiliness agent comprising one or more vegetable oils is known (see, for example, Patent Document 1). However, these conventional grease compositions do not necessarily have enough anti-flaking property.

A grease composition for constant-velocity joints containing a base oil, a diurea thickener, a sulfurized molybdenum dialkyldithiocarbamate, a dialkyldithiophosphate, metal-free sulfur-phosphorus extreme pressure additive is also known (see, for example Patent Document 2). Although this grease composition exhibits an excellent anti-flaking property, the grease is not desirable in aspects of protecting global environment and of safety because it contains lead, which is heavy metal.

Patent Document 1 JP 2915611 B
Patent Document 1 JP 2989311 B. US 2004/224859 A1 discloses a urea grease composition.

### DISCLOSURE OF INVENTION

### PROBLEMS TO BE SOLVED BY THE INVENTION

Although a certain anti-flaking property may be obtained when the above described molybdenum disulfide is used, the obtained grease is expensive and lacks versatility because of recent rising price of molybdenum.

Further, although an excellent anti-flaking property may be obtained by using lead dialkyldithiophosphate, the grease is not desirable in aspects of protecting global environment and of safety because it contains lead.

Therefore, an object of the present invention is to provide a grease composition for constant-velocity joints which is inexpensive and which has an improved anti-flaking property without using materials which have environmental burdens.

Another object of the present invention is to provide a constant-velocity joint enclosing the above-described grease composition.

### MEANS FOR SOLVING THE PROBLEMS

In order to develop the above-described grease composition for constant-velocity joints which has an improved anti-flaking property, the present inventors performed an anti-flaking property characterization by using SRV tester known as a frictional wear tester. As a result, the present inventors have discovered that there is a special relationship between the anti-flaking property of the constant-velocity joint and a wear status and a coefficient of friction of a ball and a plate under specific conditions using SRV tester. Further, the present inventors have investigated the above-mentioned relationships by various combinations of a urea grease used as a base grease and a variety of extreme pressure agents or the like.

As a result, the present inventor have discovered that a grease composition containing a diurea thickener, a base oil, zinc dialkyldithiophosphate, sulfurized molybdenum dialkyldithiocarbamate, zinc dialkyldithiocarbamate, and sulfur-nitrogen extreme pressure additive has extremely improved wear resistance and low frictional properties. Further, it has been discovered that, also in an endurance test using an actual constant-velocity joint, the grease composition may be inexpensive and the anti-flaking property may be improved as compared to the conventional grease composition for constant-velocity joints without using materials which have environmental burdens.

The present invention was made based on this discovery, and provides the grease composition for constant-velocity joints and constant-velocity joint enclosing the same, as defined in the claims.

### EFFECT OF THE INVENTION

The grease composition of the present invention may be inexpensive and the anti-flaking property may be improved as compared to the conventional grease composition for constant-velocity joints without using materials which have environmental burdens.

### BEST MODE FOR CARRYING OUT THE INVENTION

Examples of the ingredient (a), the base oil, include mineral oils such as naphthene mineral oils and paraffin mineral oils; synthetic hydrocarbon oils such as polybutene; ether type synthetic oils such as alkyl diphenyl ethers; various synthetic oils such as silicone oils and fluorinated oils; and the like.

Although these oils may be used alone or a combination of two or more of these may be mixed, the mineral oils are especially preferably used alone in terms of price.

An especially preferred base oil has a kinematic viscosity of 10 mm²/s at a temperature of 100°C.

The ingredient (b), the diurea thickener, used in the present invention may be obtained by reacting a predetermined diisocyanate and a predetermined monoamine(s).

As the ingredient (b), the diurea thickener is the compound represented by the following general formula (1) :

R¹NH-CO-NH-C₆H₄-p-CH₂-C₆H₄-p-NH-CO-NHR^{1'} (1)

wherein R¹ and R^{1'} are independently C8-C20, preferably C8-C18 alkyl,

Specific examples of aliphatic amines include octylamines, dodecyl amines, hexadecyl amines, octadecyl amines.

The ingredient (b), the aliphatic diurea thickners, obtained by using octylamine, dodecyl amine and octadecyl amine among the above-described monoamines or mixture thereof are especially preferred.

The content of the ingredient (b), the diurea thickener, in the grease composition of the present invention may be an appropriate amount by which a required consistency is 1 to 25 % by mass, more preferably 2 to 20 % by mass based on the whole mass of the grease composition. When the content of diurea thickener exceeds 25 % by mass, the obtained grease composition may be too hard. In this case, an expected effect is hardly obtained.

The ingredient (c), the zinc dialkyldithiophosphate used for the present invention is preferably the compound represented by the following general formula (2):

[(R²O)₂SP-S]₂-Zn (2)

wherein R² is primary or secondary C1-C24 alkyl or C6-C30 aryl. R² is especially preferably C3-C8 primary or secondary alkyl.

The content of the ingredient (c) in the grease composition of the present invention is 0.1 to 10% by mass, more preferably 0.1 to 5% by mass. The effect may be insufficient when the content is less than 0.1% by mass. A further promoted effect may not be observed even when the content exceeds 10% by mass.

The ingredient (d), that is the sulfurized molybdenum dialkyldithiocarbamate used for the present invention is preferably the composition represented by the following general formula (3):

[R³₂N-CS-S]₂-Mo₂OₘSₙ (3)

wherein R³ is primary or secondary C1-C24, preferably C3-C18 alkyl, m is 0 to 3, n is 1 to 4 and m + n = 4.

The content of the ingredient (d) in the grease composition of the present invention is 0.1 to 10% by mass, more preferably 0.1 to 5% by mass. The effect may be insufficient when the content is less than 0.1% by mass. A further promoted effect may not be observed even when the content exceeds 10% by mass.

The ingredient (e), the zinc dialkyldithiocarbamate used for the present invention is preferably the composition represented by the following general formula (4):

[R⁴₂N-CS-S]₂-Zn (4)

wherein R⁴ is primary or secondary C1-C24 alkyl or C6-C30 aryl. R⁴ is especially preferably C3-C8 primary or secondary alkyl.

The content of the ingredient (e) in the grease composition of the present invention is 0.1 to 5% by mass, more preferably 1 to 5% by mass. The effect may be insufficient when the content is less than 0.1% by mass. A further promoted effect may not be observed even when the content exceeds 5% by mass.

The ingredient (f), the sulfur-nitrogen extreme pressure additive used for the present invention preferably has sulfur content of 5 to 20% by mass and nitrogen content of 1 to 10% by mass.

The content of the ingredient (f) in the grease composition of the present invention is 0.05 to 3% by mass. The effect may be insufficient when the content is less than 0.05% by mass. A further promoted effect may not be observed even when the content exceeds 3% by mass.

The grease composition of the present invention may contain other extreme pressure additives, antioxidants, rust preventives, anticorrosives and/or the like in addition to the above-described ingredients.

The grease composition for constant-velocity joints of the present invention may be easily produced by using the ingredients (a) to (f) as essential ingredients in a desired mixing ratio and using a variety of the above-described additives as an optional ingredient. For example, a urea grease as a base grease is prepared in advance by mixing the ingredient (a) and the ingredient (b), and then the ingredients (c) to (f) are added thereto as required to produce the grease composition.

The grease composition for constant-velocity joints of the present invention, for example, preferably has a consistency of 265 to 385, more preferably 285 to 340 measured by JIS K 2220 5.3. The adjustment of such consistency may easily be performed by adjusting the amount of the above-described ingredient (b).

The grease composition for constant-velocity joint of the present invention may be employed for any kind of constant-velocity joints without any limitations. The effect of the grease composition is observed remarkably when it is used for slide-type constant-velocity joints, such as, double offset constant-velocity joint, tripod constant-velocity joint.

The effect of the grease composition is observed remarkably also when it is used for fixed-type constant-velocity joints, such as Rzeppa constant-velocity joint.

Therefore, a variety of constant-velocity joints enclosing the above-described grease compositions are also within the scope of the present invention.

### EXAMPLES

### Preparation of Grease Composition>

(a) After 250 g (1 mole) of diphenylmethane-4,4'-diisocyanate and 258 g (2 moles) of octylamine were reacted in 4000 g of a mineral oil having a kinematic viscosity of 13.2 mm²/s at a temperature of 100°C, the resulting (b), the diurea compound, was uniformly dispersed to obtain a base grease.

To this base grease, additives were added in the mixing ratios as shown in Table 1 and the resultant was adjusted to JIS consistency No.1 grade (310 to 340) by three roll mill while (a) mineral oil were further added as required.

**Table. 1**

| | | Examples | | | Comparative Examples | | | | | | |
|---|---|---|---|---|---|---|---|---|---|---|---|
| | | 1 | 2 | 3 | 1 | 2 | 3 | 4 | 5 | 6 | 7 |
| (a) | base oil | 91 | 90 | 90 | 94 | 94 | 93 | 92 | 92 | 92 | 92 |
| (b) | diurea thickener | 5 | 5 | 5 | 5 | 5 | 5 | 5 | 5 | 5 | 5 |
| (c) | ZnDTP^{*1} | 1 | 1 | 1 | 1 | - | 1 | - | 1 | 1 | 1 |
| (d) | MoDTC ^{*2} | 1 | 1 | 2 | - | 1 | 1 | 1 | - | 1 | 1 |
| (e) | ZnDTC^{*3} | 1 | 2 | 1 | - | - | - | 1 | 1 | - | 1 |
| (f) | S-N extreme pressure agent ^{*4} | 1 | 1 | 1 | - | - | - | 1 | 1 | 1 | - |
| SRV test | ball wear track diameter | 0.53 | 0.54 | 0.56 | 0.71 | 0.86 | 0.70 | 0.75 | 0.71 | 0.72 | 0.56 |
| | coefficient of friction | 0.058 | 0.058 | 0.059 | 0.094 | 0.073 | 0.070 | 0.078 | 0.091 | 0.075 | 0.072 |
| anti-flaking property | constant-velocity joint-A ^{*5} | ○ | ○ | ○ | × | × | × | × | × | × | × |
| | constant-velocity joint-B ^{*6} | ○ | ○ | ○ | × | × | × | × | × | × | × |
| | constant-velocity joint-C ^{*7} | ○ | ○ | ○ | × | × | × | × | × | × | × |

| | | | | | | | | | | | |
|---|---|---|---|---|---|---|---|---|---|---|---|
| *1) zinc dialkyldithiophosphate *2) sulfurized molybdenum dialkyldithiocarbamate *3) zinc dialkyldithiocarbamate *4) heterocyclic sulfur-nitrogen compound *5) slide-type constant-velocity joint having 8 balls as rolling elements *6) fixed -type constant-velocity joint having 8 balls as rolling elements *7) slide -type tripod constant-velocity joint having rollers as rolling elements | | | | | | | | | | | |

### <SRV test>

With each of grease compositions in the above-described Examples 1 to 3 and Comparative Examples 1 to 7, size of the wear track of balls and coefficient of friction were read by an SRV frictional wear test to evaluate wear resistance and low frictional properties.
The test method and test conditions were based on ASTM D5707.

From a practical viewpoint, it is required that the size of the wear track is not more than 0.60 mm and the coefficient of friction is not more than 0.065.

### <anti-flaking property>

Each of grease compositions in the above-described Examples 1 to 3 and Comparative Examples 1 to 7 was enclosed in actual joints (slide-type constant-velocity joint and fixed -type constant-velocity joint, each having 8 balls as rolling elements, and slide -type tripod constant-velocity joint having rollers as rolling elements). A joint durability test was performed under the following conditions by using these joints to evaluate the time at the occurrence of flaking.

### • Measurement Condition

rotation speed: 200 rpm
torque: 1000N·m
angle: 6°

### •Evaluation Method and Evaluation Standard

Time at the occurrence of flaking at each part (outer race, inner race (or trunnion), cage, ball (or roller)) of a joint
○: not less than 500h
×: less than 500h

The results are shown in Table 1.

The grease compositions for constant-velocity joints in Examples 1 to 3 of the present invention comprising the ingredients (a) to (f) have a size of wear track of not more than 0.60 mm, coefficient of friction of not more than 0.065 and the time at the occurrence of flaking at each part of a joint of not less than 500 hours. Therefore, the grease composition of the present invention is inexpensive and has an improved anti-flaking property without using materials which have environmental burdens.

On the other hand, the size of the wear tracks with the grease compositions for constant-velocity joints in Comparative Example 1 in which the ingredients (d) to (f) are not included, Comparative Example 2 in which the ingredient (c), (e) and (f) were not included, Comparative Example 3 in which the ingredient (e) and (f) were not included, Comparative Example 4 in which the ingredient (c) is not included, Comparative Example 5 in which the ingredient (d) is not included, and Comparative Example 6 in which the ingredient (e) is not included, exceeded 0.60 mm. Any of the coefficient of friction in any of these exceeded 0.065. The time at the occurrence of flaking at each part of a joint in any of Comparative Examples 1 to 7 was less than 500 hours. Therefore, any of the grease compositions of these Comparative Examples do not have an improved anti-flaking property.

## Claims

1. A grease composition for constant-velocity joints comprising:
(a) a base oil,
(b) a diurea thickener,
(c) a zinc dialkyldithiophosphate,
(d) a sulfurized molybdenum dialkyldithiocarbamate,
(e) a zinc dialkyldithiocarbamate, and
(f) a sulfur-nitrogen extreme pressure additive wherein said (b) diurea thickener is a compound represented by the following formula (1):
R¹NH-CO-NH-C₆H₄-p-CH₂-C₆H₄-p-NH-CO-NHR^{1'} (1)
wherein R¹ and R^{1'} are independently C8-C20 alkyl and
wherein said (b) diurea thickener is contained in an amount of 1 to 25% by mass, said (c) zinc dialkyldithiophosphate is contained in an amount of 0.1 to 10%,
said (d) sulfurized molybdenum dialkyldithiocarbamate is contained in an amount of 0.1 to 10%, said (e) zinc dialkyldithiocarbamate is contained in an amount of 0.1 to 5% by mass and
said (f) sulfur-nitrogen extreme pressure additive is contained in an amount of 0.05 to 3% by mass, based on the total amount of the composition.

2. A grease composition for constant-velocity joints according to claim 1 wherein said (c) zinc dialkyldithiophosphate is a compound represented by the following formula (2):
[(R²O)₂SP-S]₂-Zn (2)
wherein R² is a primary or secondary C1-C24 alkyl or C6-C30 aryl.

3. A grease composition for constant-velocity joints according to any one of claims 1 to 2 wherein said (d) sulfurized molybdenum dialkyldithiocarbamate is a compound represented by the following formula (3):
[R³₂N-CS-S]₂-Mo₂OₘSₙ (3)
wherein R³ is a primary or secondary C1-C24 alkyl, m is 0 to 3, n is 1 to 4 and m + n = 4.

4. A grease composition for constant-velocity joints according to any one of claims 1 to 3 wherein said (e) zinc dialkyldithiocarbamate is a compound represented by the following formula (4):
[R⁴₂N-CS-S]₂-Zn (4)
wherein R⁴ is a primary or secondary C1-C24 alkyl or C6-C30 aryl.

5. A grease composition for constant-velocity joints according to any one of claims 1 to 4 wherein said (f) sulfur-nitrogen extreme pressure additive has a sulfur content of 5 to 20% by mass and a nitrogen content of 1 to 10% by mass.

6. A constant-velocity joint, which encloses the grease composition for constant-velocity joints according to any one of claims 1 to 5.

## Patentansprüche

1. Eine Schmierfettzusammensetzung für Gleichlaufgelenke, umfassend:
(a) ein Grundöl,
(b) ein Diharnstoffverdickungsmittel,
(c) ein Zinkdialkyldithiophosphat,
(d) ein geschwefeltes Molybdändialkyldithiocarbamat,
(e) ein Zinkdialkyldithiocarbamat, und
(f) ein Schwefel-Stickstoff-Extremdruckadditiv, wobei das (b) Diharnstoffverdickungsmittel eine Verbindung ist, dargestellt durch die folgende Formel (1):
R¹NH-CO-NH-C₆H₄-p-CH₂-C₆H₄-p-NH-CO-NHR^{1'} (1)
wobei R¹ und R^{1'} unabhängig C8-C20-Alkyl sind und
wobei das (b) Diharnstoffverdickungsmittel in einer Menge von 1 bis 25 Massen-% enthalten ist, wobei (c) Zinkdialkyldithiophosphat in einer Menge von 0,1 bis 10% enthalten ist,
das (d) geschwefelte Molybdändialkyldithiocarbamat in einer Menge von 0,1 bis 10% enthalten ist, das (e) Zinkdialkyldithiocarbamat in einer Menge von 0,1 bis 5 Massen-% enthalten ist und
das (f) Schwefel-Stickstoff-Extremdruckadditiv in einer Menge von 0,05 bis 3 Massen-% enthalten ist, bezogen auf die Gesamtmenge der Zusammensetzung.

2. Eine Schmierfettzusammensetzung für Gleichlaufgelenke nach Anspruch 1, wobei das (c) Zinkdialkyldithiophosphat eine Verbindung ist, dargestellt durch die folgende Formel (2):
[(R²O)₂SP-S]₂-Zn (2)
wobei R² ein primäres oder sekundäres C1-C24-Alkyl oder C6-C30-Aryl ist.

3. Eine Schmierfettzusammensetzung für Gleichlaufgelenke nach einem der Ansprüche 1 bis 2, wobei das (d) geschwefelte Molybdändialkyldithiocarbamat eine Verbindung ist, dargestellt durch die folgende Formel (3):
[R³₂N-CS-S]₂-Mo₂OₘSₙ (3)
wobei R³ ein primäres oder sekundäres C1-C24-Alkyl ist, m gleich 0 bis 3 ist, n gleich 1 bis 4 ist und m + n = 4.

4. Eine Schmierfettzusammensetzung für Gleichlaufgelenke nach einem der Ansprüche 1 bis 3, wobei das (e) Zinkdialkyldithiocarbamat eine Verbindung ist, dargestellt durch die folgende Formel (4):
[R⁴₂N-CS-S]₂-Zn (4)
wobei R⁴ ein primäres oder sekundäres C1-C24-Alkyl oder C6-C30-Aryl ist.

5. Eine Schmierfettzusammensetzung für Gleichlaufgelenke nach einem der Ansprüche 1 bis 4, wobei das (f) Schwefel-Stickstoff-Extremdruckadditiv einen Schwefelgehalt von 5 bis 20 Massen-% und einen Stickstoffgehalt von 1 bis 10 Massen-% aufweist.

6. Ein Gleichlaufgelenk, das die Schmierfettzusammensetzung für Gleichlaufgelenke nach einem der Ansprüche 1 bis 5 umfasst.

## Revendications

1. Composition de graisse pour joints homocinétiques comprenant :
(a) une huile de base,
(b) un épaississant de type diurée,
(c) un dialkyldithiophosphate de zinc,
(d) un dialkyldithiocarbamate de molybdène sulfuré,
(e) un dialkyldithiocarbamate de zinc, et
(f) un additif extrême pression à base de soufre-azote, dans laquelle ledit épaississant de type diurée (b) est un composé représenté par la formule (1) suivante :
R¹NH-CO-NH-C₆H₄-p-CH₂-C₆H₄-p-NH-CO-NHR^{1'} (1)
dans laquelle R¹ et R^{1'} sont indépendamment des radicaux alkyle en C₈ à C₂₀ et
dans laquelle ledit épaississant de type diurée (b) est présent en une quantité de 1 à 25 % en masse, ledit dialkyldithiophosphate de zinc (c) est présent en une quantité de 0,1 à 10 %,
ledit dialkyldithiocarbamate de molybdène sulfuré (d) est présent en une quantité de 0,1 à 10 %, ledit dialkyldithiocarbamate de zinc (e) est présent en une quantité de 0,1 à 5 % en masse et
ledit additif extrême pression à base de soufre-azote (f) est présent en une quantité de 0,05 à 3 % en masse, par rapport à la quantité totale de la composition.

2. Composition de graisse pour joints homocinétiques selon la revendication 1, dans laquelle ledit dialkyldithiophosphate de zinc (c) est un composé représenté par la formule (2) suivante :
[(R²O)₂SP-S]₂-Zn (2)
dans laquelle R² est un radical aryle en C₆ à C₃₀ ou alkyle en C₁ à C₂₄ primaire ou secondaire.

3. Composition de graisse pour joints homocinétiques selon l'une quelconque des revendications 1 à 2, dans laquelle ledit dialkyldithiocarbamate de molybdène sulfuré (d) est un composé représenté par la formule (3) suivante :
[R³₂N-CS-S]₂-MO₂OₘSₙ (3)
dans laquelle R³ est un radical alkyle en C₁ à C₂₄ primaire ou secondaire, m vaut de 0 à 3, n vaut de 1 à 4 et m + n = 4.

4. Composition de graisse pour joints homocinétiques selon l'une quelconque des revendications 1 à 3, dans laquelle ledit dialkyldithiocarbamate de zinc (e) est un composé représenté par la formule (4) suivante :
[R⁴₂N-CS-S]₂-Zn (4)
dans laquelle R⁴ est un radical aryle en C₆ à C₃₀ ou alkyle en C₁ à C₂₄ primaire ou secondaire.

5. Composition de graisse pour joints homocinétiques selon l'une quelconque des revendications 1 à 4, dans laquelle ledit additif extrême pression à base de soufre-azote (f) a une teneur en soufre de 5 à 20 % en masse et une teneur en azote de 1 à 10 % en masse.

6. Joint homocinétique qui renferme la composition de graisse pour joints homocinétiques selon l'une quelconque des revendications 1 à 5.
